# EUROPEAN PATENT APPLICATION

(11) **EP 1 327 952 A1**
(43) Date of publication of application: **16.07.2003**
(21) Application number: 02256581.6
(22) Date of filing: 23.09.2002
(51) Int. Cl.: G06F 17/60

(54) **Net auction management method and net auction management program**

(30) Priority: 10.01.2002 JP 2002003199
(71) Applicant: FUJITSU LIMITED, Kawasaki-shi, Kanagawa 211-8588 (JP)
(72) Inventor: Miura, Satoru Fujitsu Aomori Syst. Engineering Ltd, Aomori-shi, Aomori 030-0192 (JP); Kimura, Osamu., Fujitsu Aomori Syst. Eng. Ltd., Aomori-shi, Aomori 030-0192 (JP)
(74) Representative: Hitching, Peter Matthew

(57) **Abstract**

A net auction management method that can induce a bidder to make a bid early for a commodity put up for net auction is disclosed. Bid requests which specify bid prices for a commodity registered in advance are accepted via a network (2). After an auction period ends, one of the bid requests which specified the highest bid price before the end of the auction period is determined as a bid established as a successful bid. Then a successful bid price is determined by gradually dropping the bid price according to time which elapsed after acceptance of the bid established as a successful bid and before the ending of the auction period.

## Description

### BACKGROUND OF THE INVENTION

### (1) Field of the Invention

This invention relates to a net auction management method and net auction management program for managing an auction via a network and, more particularly, to a net auction management method and net auction management program for activating transactions.

### (2) Description of the Related Art

With the spread of communication using the Internet, electronic commerce via the Internet is extensively conducted. Electronic commerce used by personal users includes net auction.

With at-home auctions held by the use of the Internet, usually an auction period is set in advance to make a bid for a commodity put up. The commodity will be knocked down to the highest bidder during this auction period.

However, because an auction period is set, bids tend to be intensively made just before the end of the auction period when a successful bidder is decided. That is to say, there is no need to make bids throughout the auction period. A bidder needs only to make a bid just before the end of the auction period. As a result, no bid will be made during a significant part of time from the beginning of the auction period to the end of the auction period.

As a result of such an avalanche of bids just before the end of an auction period, a load on a system varies with time. That is to say, bids are intensively made by participants just before the end of an auction period, so a load on a system increases temporarily and sharply. Building a system being able to withstand this heavy load state which continues only a very short period of time will be costly. Moreover, time in which real competition is carried on shortens, so an auction will end without strong price competition being carried on. The desired price for a commodity therefore will not be reached. This is disadvantageous to a person who put the commodity up.

Furthermore, if a participant in an auction wants to make a successful bid reliably for a commodity, he/she must monitor a price movement just before the end of an auction period. Therefore, if business, such as a job, turns up at time just before the end of the auction period, then it will be difficult for him/her to make a successful bid for the commodity which he/she wants to obtain. As a result, it is hard for a person who is always busy, for example, at work to participate in a net auction. Therefore, a system by which a person can make a successful bid in a short period of time without being restricted by an auction period set in advance is expected to appear.

Being able to make a successful bid in a short period of time is very convenient to participants. As a result, the number of participants in auctions is expected to increase. If the number of participants in auctions increases, the possibility that commodities are knocked down at high prices will get stronger and this is advantageous to persons who put the commodities up. In addition, each commodity is knocked down in a short period of time, so a cycle in which commodities are put up shortens and transactions by auction can be activated.

### SUMMARY OF THE INVENTION

The present invention was made under the background circumstances as described above. An object of the present invention is to provide a net auction management unit and net auction management program which can induce a bidder to make a bid early at a net auction.

In order to achieve the above object, a net auction management method for managing an auction via a network with a net auction management unit is provided. This net auction management method comprises the steps of accepting bid requests via the network which specify bid prices for a commodity registered in advance, determining one of the bid requests which specified the highest bid price before the end of an auction period as a bid established as a successful bid after the end of the auction period, and determining a successful bid price by gradually dropping the bid price specified by the bid established as a successful bid according to time which elapsed after acceptance of the bid established as a successful bid and before the ending of the auction period.

Moreover, this net auction management method comprises the steps of judging, in the case of information which indicates the end of an auction period being given via the network by a person who put a commodity up, that an auction period has ended, and determining an amount gradually increased according to the length of the auction period as a charge imposed on the person who put the commodity up after the end of the auction period.

Furthermore, in order to achieve the above object, a net auction management program for managing an auction via a network is provided. This net auction management program causes a computer to perform the process of accepting bid requests via the network which specify bid prices for a commodity registered in advance, judging one of the bid requests which specified the highest bid price before the end of an auction period to be a bid established as a successful bid after the end of the auction period, and determining a successful bid price by gradually dropping the bid price specified by the bid established as a successful bid according to time which elapsed after acceptance of the bid established as a successful bid and before the end of the auction period.

The above and other objects, features and advantages of the present invention will become apparent from the following description when taken in conjunction with the accompanying drawings which illustrate preferred embodiments of the present invention by way of example.

### BRIEF DESCRIPTION OF THE DRAWINGS

Fig. 1 is a schematic view of an embodiment of the present invention.
Fig. 2 is a view showing an example of a gradual drop in a successful bid price according to the present invention.
Fig. 3 is a view showing a first example of a gradual increase in charge rate according to the present invention.
Fig. 4 is a view showing a second example of a gradual increase in charge rate according to the present invention.
Fig. 5 is a view showing a third example of a gradual increase in charge rate according to the present invention.
Fig. 6 is a view showing the structure of an auction system in the embodiment.
Fig. 7 is a view showing the hardware configuration of a net auction management unit used in the embodiment of the present invention.
Fig. 8 is a functional block diagram showing the function of the net auction management unit.
Fig. 9 is a view showing the data structure of a commodity master table.
Fig. 10 is a view showing the data structure of basic commodity information included in the commodity master table.
Fig. 11 is a view showing the data structure of basic bid information included in the commodity master table.
Fig. 12 is a view showing the data structure of successful bid information included in the commodity master table.
Fig. 13 is a view showing the data structure of a bid master table.
Fig. 14 is a view showing the data structure of a gradual price drop table.
Fig. 15 is a view showing the data structure of a charge table.
Fig. 16 is a flow chart showing the procedure for putting a commodity up.
Fig. 17 is a view showing an example of a commodity registration screen.
Fig. 18 is a flow chart showing the procedure of a bid process.
Fig. 19 is a view showing an example of a bid screen.
Fig. 20 is a flow chart showing the procedure of an auction ending process.
Fig. 21 is a view showing an example of a commodity information screen.
Fig. 22 is a flow chart showing the procedure of a price determination process.
Fig. 23 is a flow chart showing the procedure of a charge determination process.
Fig. 24 is a view showing the data structure of a gradual price drop table in which gradual price drop information according to commodities can be set.
Fig. 25 is a view showing an example of a commodity registration screen on which gradual price drop information can be entered.
Fig. 26 is a view showing the data structure of a charge table in which charges are indicated by an amount of money.

### DESCRIPTION OF THE PREFERRED EMBODIMENTS

Embodiments of the present invention will now be described with reference to the drawings.

An overview of an embodiment of the present invention will be given first, then the concrete contents of the embodiment of the present invention will be described.

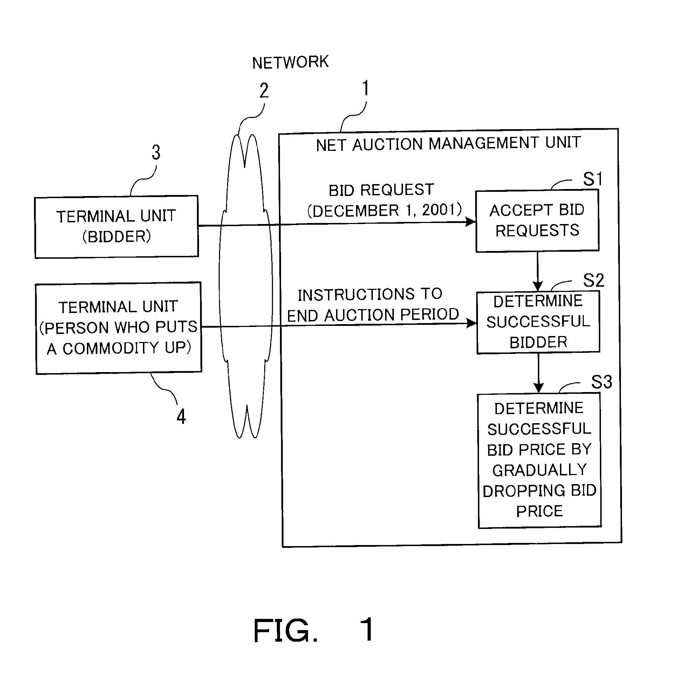

Fig. 1 is a schematic view of an embodiment of the present invention. A net auction management method for managing an auction via a network 2 with a net auction management unit 1 is applied to this embodiment. Terminal units 3 and 4 are connected to the net auction management unit 1 via the network 2. For example, the terminal unit 3 is used by a bidder who wants to buy a commodity at a net auction. The terminal unit 4 is used by a person who wants to sell a commodity by putting it up for net auction.

The net auction management unit 1 accepts bid requests via the network 2 which specify bid prices for a commodity registered in advance from the terminal unit 3 used by bidders (step S1). After an auction period ends, the net auction management unit 1 determines one of the bid requests which specified the highest bid price before the end of the auction period as a bid established as a successful bid (step S2). Whether the auction period has ended is judged on the basis of, for example, information indicative of the end of the auction period sent from the terminal unit 4 used by a person who put the commodity up. The net auction management unit 1 determines a successful bid price by gradually dropping the bid price specified by the bid established as a successful bid according to time which elapsed after acceptance of the bid established as a successful bid and before the ending of the auction period (step S3).

By using this net auction management method, bid requests which specify bid prices for a commodity registered in advance are accepted by the net auction management unit 1 via the network 2. A bid established as a successful bid is determined after the end of an auction period. Then a successful bid price is determined by gradually dropping the bid price specified by the bid established as a successful bid according to time which elapsed after acceptance of the bid established as a successful bid and before the ending of the auction period.

Therefore, as the period from a bid to the end of an auction period becomes longer, a successful bid price can gradually be dropped. As a result, there is a stronger possibility that a bidder who made a bid earlier can buy a commodity at a low price. This promotes early bids.

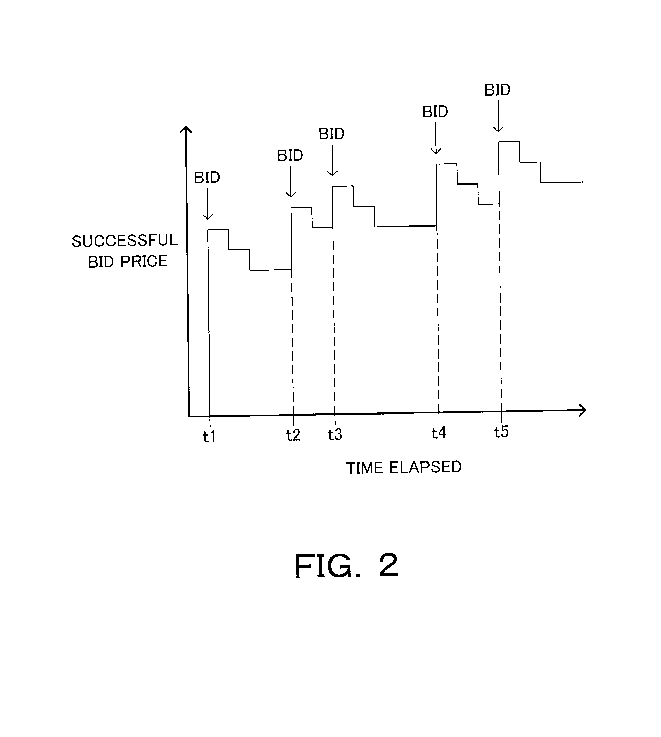

Fig. 2 is a view showing an example of a gradual drop in a successful bid price according to the present invention. In Fig. 2, a change in successful bid price according to the time elapsed is shown. In Fig. 2, a horizontal axis indicates time which elapsed after the beginning of an auction period, and a vertical axis indicates a successful bid price.

In this example, the first bid is made time t1 after the beginning of an auction. If the auction ends at this point, then a successful bid price remains a bid price specified by the first bid. Then the successful bid price drops by stages with time. However, the successful bid price will not be dropped by a rate higher than the maximum drop rate.

After the first bid, bids are made at time t2, t3, t4, and t5, respectively, after the beginning of the auction. Each time a bid is made, the successful bid price rises to a new bid price and then drops by stages with time.

As stated above, by gradually dropping a successful bid price according to the period from a bid to the end of an auction period, a bidder who made a bid earlier will be able to buy a commodity at a lower price. This promotes early bids and activates net auctions.

To activate auctions by ending them in a short period of time, charges claimed from persons who put commodities up should be varied with the time which elapsed after the beginning of auctions. For example, charge rates calculated on the basis of successful bid prices should gradually be raised according to the time elapsed.

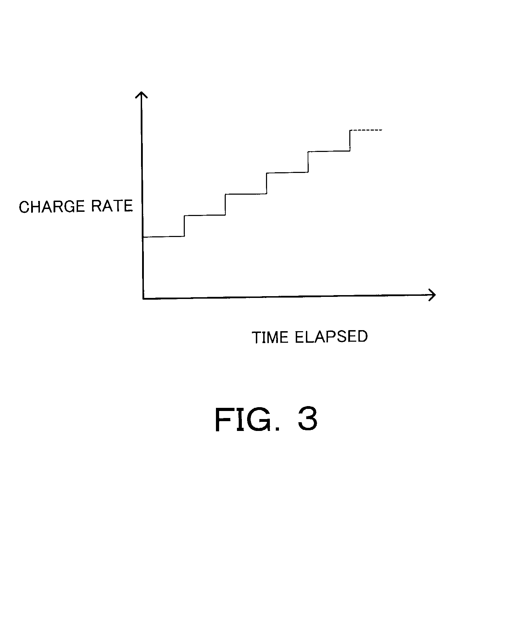

Fig. 3 is a view showing a first example of a gradual increase in charge rate according to the present invention. In Fig. 3, a change in charge rate according to the time elapsed is shown. In Fig. 3, a horizontal axis indicates time which elapsed after the beginning of an auction, and a vertical axis indicates a charge rate. In this example, a charge rate increases by stages from a basic charge rate at the beginning of an auction with the time elapsed.

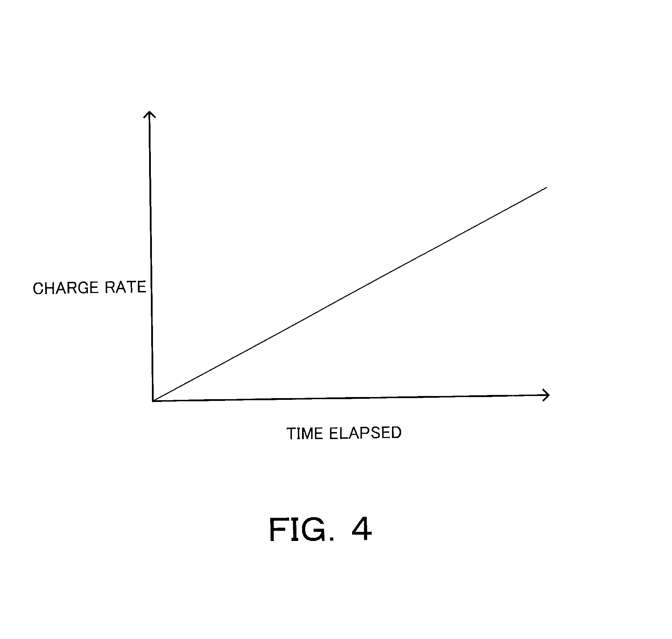

Fig. 4 is a view showing a second example of a gradual increase in charge rate according to the present invention. In Fig. 4, a change in charge rate according to the time elapsed is shown. In Fig. 4, a horizontal axis indicates time which elapsed after the beginning of an auction, and a vertical axis indicates a charge rate. In this example, a charge rate increases linearly with the time elapsed.

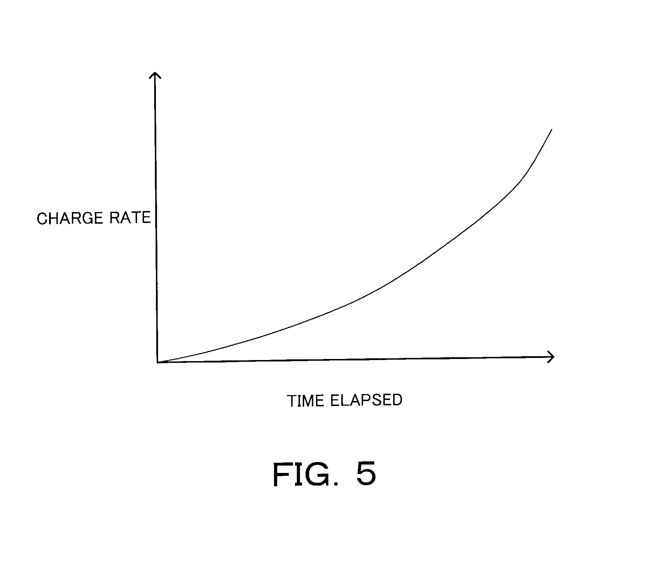

Fig. 5 is a view showing a third example of a gradual increase in charge rate according to the present invention. In Fig. 5, a change in charge rate according to the time elapsed is shown. In Fig. 5, a horizontal axis indicates time which elapsed after the beginning of an auction, and a vertical axis indicates a charge rate. In this example, a charge rate increases with the time elapsed and the amount of an increase in the charge rate per unit time also increases with the time elapsed.

As stated above, a gradual increase in charge rate according to the time elapsed will lead persons who put a commodity up to shorten an auction period. This promotes the use of net auctions.

The use of net auctions can also be promoted by levying no charge during a certain period after the beginning of an auction.

Now, an example of a case where net auction services via the Internet are provided by causing a computer to perform the net auction management method according to the present invention will be described concretely as an embodiment of the present invention. Hereinafter, a computer described below which realizes the net auction management method will function as a net auction management unit.

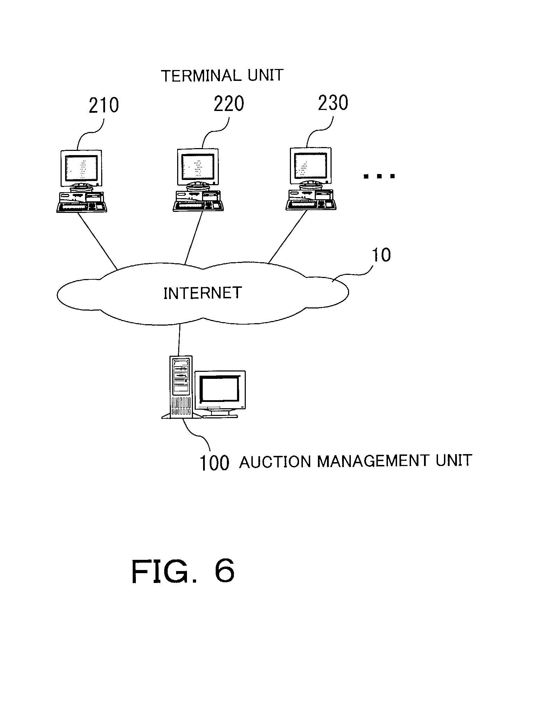

Fig. 6 is a view showing the structure of an auction system in this embodiment. In this embodiment, a plurality of terminal units 210, 220, 230, etc. are connected to a net auction management unit 100 via the Internet 10. The net auction management unit 100 is a server computer for managing electronic commerce by net auction. The terminal units 210, 220, 230, etc. are client computers used by a person who puts a commodity up for net auction or a participant who makes a bid for the commodity.

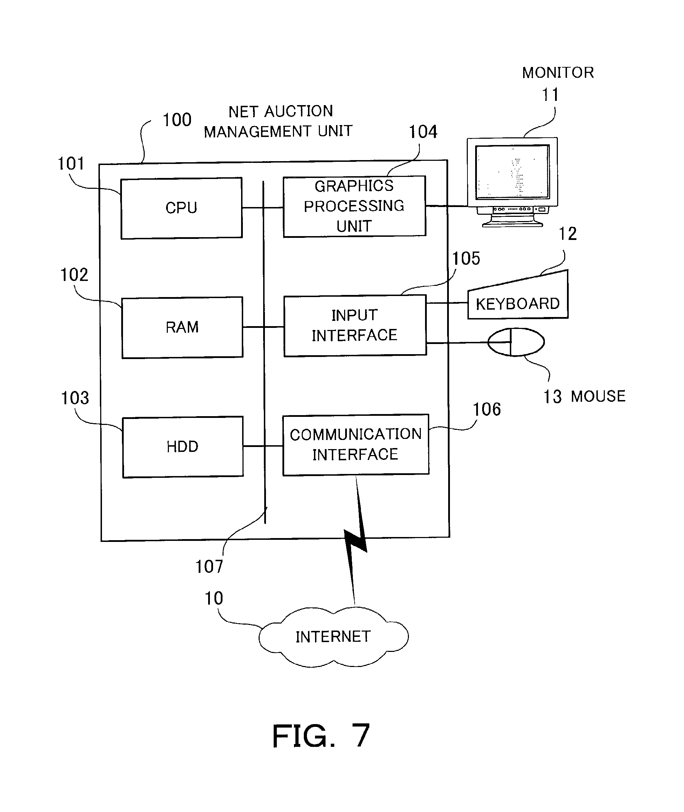

Fig. 7 is a view showing the hardware configuration of a net auction management unit used in the embodiment of the present invention. The whole of a net auction management unit 100 is controlled by a central processing unit (CPU) 101. A random access memory (RAM) 102, hard disk drive (HDD) 103, graphics processing unit 104, input interface 105, and communication interface 106 are connected to the CPU 101 via a bus 107.

The RAM 102 temporarily stores at least part of an operating system (OS) program or an application program executed by the CPU 101. In addition, the RAM 102 stores various pieces of data necessary for processing by the CPU 101. The HDD 103 stores an OS and application programs.

A monitor 11 is connected to the graphics processing unit 104. The graphics processing unit 104 displays images on a screen of the monitor 11 in compliance with instructions from the CPU 101. A keyboard 12 and mouse 13 are connected to the input interface 105. The input interface 105 sends signals sent from the keyboard 12 or the mouse 13 to the CPU 101 via the bus 107.

The communication interface 106 is connected to the Internet 10. The communication interface 106 sends data to or receives data from the terminal units 210, 220, 230, etc. via the Internet 10.

The processing function of this embodiment can be realized by the above hardware configuration. The terminal units 210, 220, 230, etc. can also be realized by a hardware configuration being the same as that of the net auction management unit shown in Fig. 7.

Now, a processing function the net auction management unit has will be described.

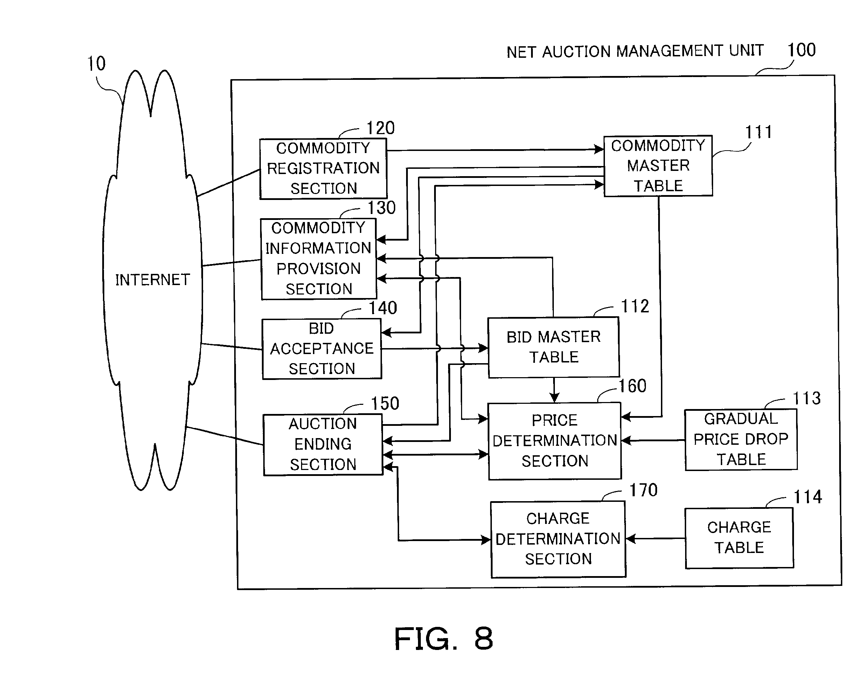

Fig. 8 is a functional block diagram showing the function of the net auction management unit. As shown in Fig. 8, the net auction management unit 100 comprises a commodity master table 111, bid master table 112, gradual price drop table 113, charge table 114, commodity registration section 120, commodity information provision section 130, bid acceptance section 140, auction ending section 150, price determination section 160, and charge determination section 170.

The commodity master table 111 is a table with which information (commodity information) regarding a commodity put up for auction is registered. This commodity information includes basic commodity information regarding a commodity put up, basic bid information regarding conditions for bidding for the commodity, and successful bid information regarding the contents of a successful bid made for the commodity.

Information (bid information) including a bid price for each commodity is registered with the bid master table 112. This bid information includes information regarding a bidder and bid price.

Information which defines conditions for gradually dropping a successful bid price for a commodity is registered with the gradual price drop table 113. In this embodiment, conditions for gradually dropping a successful bid price are defined so that a successful bid price will gradually drop according to time which elapsed after a bid being made for a commodity and before the ending of an auction period on the basis of, for example, instructions from a person who put the commodity up.

The charge table 114 defines conditions for gradually raising a charge to be paid by a person who put a commodity up to the operator of the net auction management unit 100. To be concrete, conditions for gradually raising a charge are defined so that a charge will gradually rise according to time which elapsed after the beginning of an auction of a commodity and before the ending of an auction period.

The commodity registration section 120 is connected to the commodity master table 111 and Internet 10. The commodity registration section 120 registers commodity information sent from the terminal units 210, 220, 230, etc., which are connected to it via the Internet 10, with the commodity master table 111. This commodity information includes basic commodity information regarding a commodity and basic bid information regarding conditions for bidding.

The commodity information provision section 130 is connected to the commodity master table 111, bid master table 112, price determination section 160, and Internet 10. The commodity information provision section 130 collects commodity information registered with the commodity master table 111 and bid information registered with the bid master table 112 in response to requests from the terminal units 210, 220, 230, etc. connected to the commodity information provision section 130 via the Internet 10. Moreover, the commodity information provision section 130 outputs a request to calculate an estimated successful bid price to the price determination section 160 and receives an estimated successful bid price from the price determination section 160. The commodity information provision section 130 supplies bid screen data and commodity information screen data including the commodity information, bid information, and estimated successful bid price, which it collected, to the terminal units 210, 220, 230, etc.

The bid acceptance section 140 is connected to the commodity master table 111, bid master table 112, and Internet 10. The bid acceptance section 140 accepts bid information sent from the terminal units 210, 220, 230, etc. connected to it via the Internet 10. Then the bid acceptance section 140 judges by referring to the commodity master table 111 whether or not an auction period for a commodity specified in the bid information has ended. If the auction period has not ended, then the bid acceptance section 140 registers the bid information it accepted with the bid master table 112.

The auction ending section 150 is connected to the commodity master table 111, bid master table 112, price determination section 160, charge determination section 170, and Internet 10. The auction ending section 150 judges whether or not an auction period for a commodity put up has ended. An auction period will end when an expected auction period predetermined ends or when a person who put a commodity up indicates his/her intention to end the auction.

To be concrete, when the auction ending section 150 obtains auction end information from the terminal units 210, 220, 230, etc. connected to it via the Internet 10, the auction ending section 150 judges that an auction period has ended. Alternatively, when an expected auction period included in commodity information registered with the commodity master table 111 ends, the auction ending section 150 judges that an auction period ends.

If the auction ending section 150 judges that the auction period of a commodity has ended, then the auction ending section 150 obtains an estimated successful bid price for the commodity from the price determination section 160 and determines it as a successful bid price. Moreover, the auction ending section 150 outputs a request to calculate a charge to the charge determination section 170. The charge determination section 170 returns a charge to be claimed from a person who put the commodity up. The auction ending section 150 obtains bid information regarding the commodity for which a successful bid was made from the bid master table 112 and registers the bid information, successful bid price, and charge in Successful Bid Information section in the commodity master table 111.

Furthermore, the auction ending section 150 extracts commodity information regarding the commodity for which a successful bid was made from the commodity master table 111 and sends it to a terminal unit used by a person who put the commodity up and to a terminal unit used by a successful bidder. However, the auction ending section 150 informs only the person who put the commodity up of the charge included in the commodity information. This commodity information will be sent by, for example, electronic mail. In that case, electronic mail addresses or the like should be registered in advance as member information regarding persons who put commodities up and bidders.

The price determination section 160 is connected to the commodity master table 111, bid master table 112, gradual price drop table 113, commodity information provision section 130, and auction ending section 150. The price determination section 160 calculates an estimated successful bid price for a specified commodity in response to a request from the commodity information provision section 130 to calculate an estimated successful bid price.

An estimated successful bid price depends on whether or not the function of gradually dropping a successful bid price is used (whether the function of gradually dropping a successful bid price is used will be specified in advance in the commodity master table 111). If this function is used, then a successful bid price is determined by gradually dropping in accordance with contents defined in the gradual price drop table 113. If this function is not used, then a bid price offered by a successful bidder is a successful bid price.

When the price determination section 160 calculates an estimated successful bid price, it refers to the bid master table 112 and determines a successful bidder-to-be. A successful bidder-to-be is a bidder who offered the highest bid price. A successful bidder-to-be at the end of an auction period is a successful bidder.

Then the price determination section 160 calculates an estimated successful bid price on the basis of a bid price offered by a successful bidder-to-be. If the function of gradually dropping a successful bid price is used, the price determination section 160 drops a bid price by a rate indicated in Gradual Drop Rate column at intervals of time indicated in Gradual Drop Interval column with the time when a bid is made as a starting point. By doing so, an estimated successful bid price will be obtained. In this case, a bid price will not be dropped by a rate higher than one indicated in Maximum Gradual Drop Rate column. A commodity will be knocked down with an estimated successful bid price calculated at the end of an auction period as a successful bid price. The price determination section 160 passes an estimated successful bid price it calculated to the commodity information provision section 130.

In addition, the price determination section 160 passes a successful bidder and an estimated successful bid price it determined for a commodity for which a successful bid was made to the auction ending section 150 in response to a request from the auction ending section 150 to obtain an estimated successful bid price.

The charge determination section 170 is connected to the charge table 114 and auction ending section 150. When the charge determination section 170 receives auction end information from the auction ending section 150, the charge determination section 170 refers to the commodity master table 111 and charge table 114 and determines a charge according to the period (auction period) from the time when an auction actually begins to the time when the auction actually ends. An auction period can be calculated from a value in Date and Hour of Beginning of Auction column in the commodity master table 111 and the time when the charge determination section 170 received auction end information from the auction ending section 150. Charges according to auction periods are defined in the charge table 114. The charge determination section 170 registers a charge it determined with the commodity master table 111.

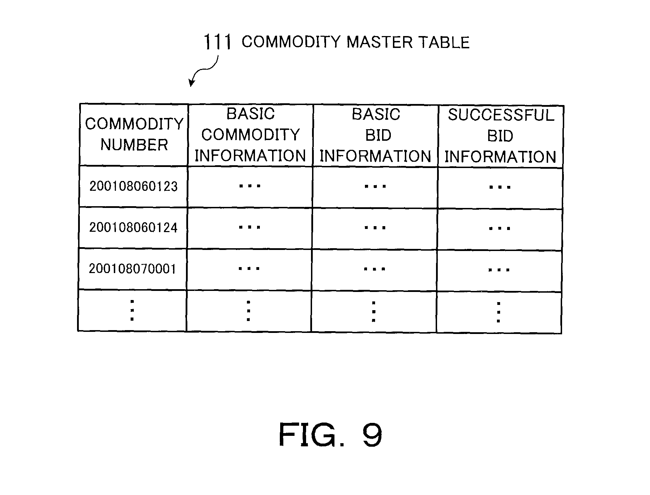

Now, the data structure of various tables included in the net auction management unit 100 will be described. Fig. 9 is a view showing the data structure of a commodity master table. As shown in Fig. 9, the commodity master table 111 includes Commodity Number column, Basic Commodity Information section, Basic Bid Information section, and Successful Bid Information section. Information regarding a commodity consists of a set of pieces of information arranged in each row.

The identification number (commodity number) of a commodity put up is indicated in the Commodity Number column. In this embodiment, a combination of the time (date) when a commodity is put up and a serial number given in order of registration of commodity information on the same day will be used as a commodity number. In this example, "200108060123," "200108060124," "200108070001," etc. are set as commodity numbers. "200108060124" is a commodity number given to commodity information registered 124th on August 6, 2001. "200108070001" is a commodity number given to commodity information registered first on August 7, 2001.

Information for describing a commodity put up will be indicated in the Basic Commodity Information section. The details of basic commodity information will be described later.

Conditions for bidding for a commodity specified by a person who put the commodity up will be indicated in the Basic Bid Information section. The details of basic bid information will be described later.

Information regarding a successful bid for a commodity put up will be indicated in the Successful Bid Information section. The details of successful bid information will be described later.

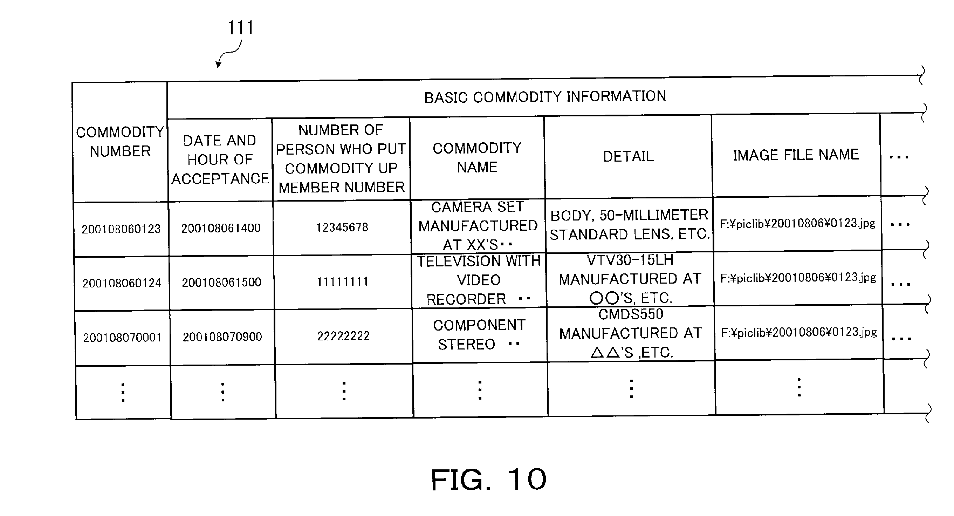

Fig. 10 is a view showing the data structure of basic commodity information included in the commodity master table. The Basic Commodity Information section in the commodity master table 111 includes Date and Hour of Acceptance, Number of Person Who Put Commodity Up (Member Number), Commodity Name, Detail, and Image File Name columns which are associated with commodity numbers indicated in the Commodity Number column. A piece of basic commodity information consists of a set of pieces of information arranged in each row.

The date and hour of the receiving of commodity information from a terminal unit used by a person who puts a commodity up is indicated in the Date and Hour of Acceptance column. The member number of a person who put a commodity up and who sent commodity information is indicated in the Number of Person Who Put Commodity Up (Member Number) column. A member number is an identification number given in advance to a net auction user. The name of a commodity put up is indicated in the Commodity Name column. A detailed description of a commodity put up is indicated in the Detail column. The place where images of a commodity put up are stored and the file name of the images are indicated in the Image File Name column.

For example, commodity information corresponding to the commodity number "200108060123" is as follows. The date and hour of acceptance is 14:00 on August 6, 2001 (200108061400). The member number of a person who put a commodity up is "12345678." The name of the commodity is a "camera set manufactured at XX's." The details of the commodity are "a body, a 50-millimeter standard lens, etc." An image file name is "F:¥piclib¥20010806¥0123.jpg."

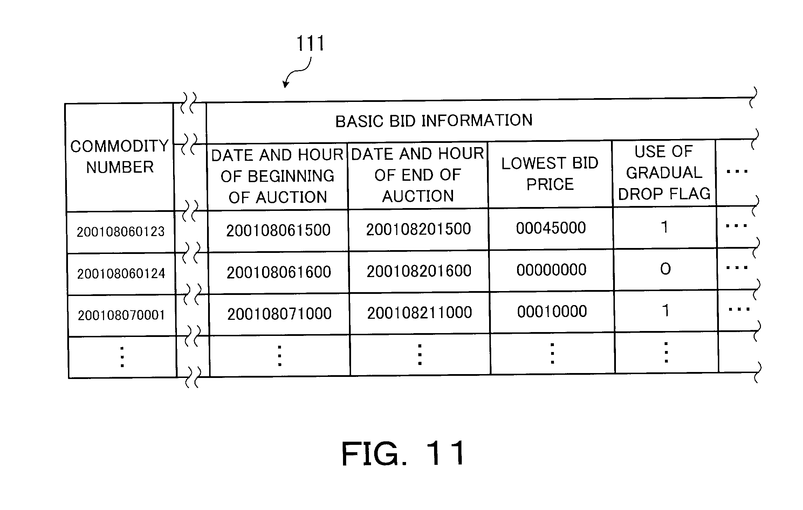

Fig. 11 is a view showing the data structure of basic bid information included in the commodity master table. The Basic Bid Information section in the commodity master table 111 includes Date and Hour of Beginning of Auction, Date and Hour of End of Auction, Lowest Bid Price, and Use of Gradual Drop Flag columns which are associated with commodity numbers indicated in the Commodity Number column. A piece of basic bid information consists of a set of pieces of information arranged in each row.

The date and hour of the beginning of an expected auction period is indicated in the Date and Hour of Beginning of Auction column. The date and hour of the end of an expected auction period is indicated in the Date and Hour of End of Auction column. The lowest bid price specified by a person who put a commodity up is indicated in the Lowest Bid Price column in yen. If the lowest bid price is not specified, then the value "00000000" which means zero yen will be indicated in the Lowest Bid Price column. A flag (use of gradual drop flag) indicative of whether or not the function of gradually dropping a successful bid price according to time which elapsed after a bid being made is used is set in the Use of Gradual Drop Flag column. If this function is used, then the use of gradual drop flag is set to one. If this function is not used, then the use of gradual drop flag is set to zero.

For example, basic bid information corresponding to the commodity number "200108060123" is as follows. The date and hour of the beginning of an auction is 15:00 on August 6, 2001 (200108061500). The date and hour of the end of an auction is 15:00 on August 20, 2001 (200108201500). The lowest bid price is 45,000 yen (45000). A use of gradual drop flag is "1." This means that the function of gradually dropping a successful bid price is used.

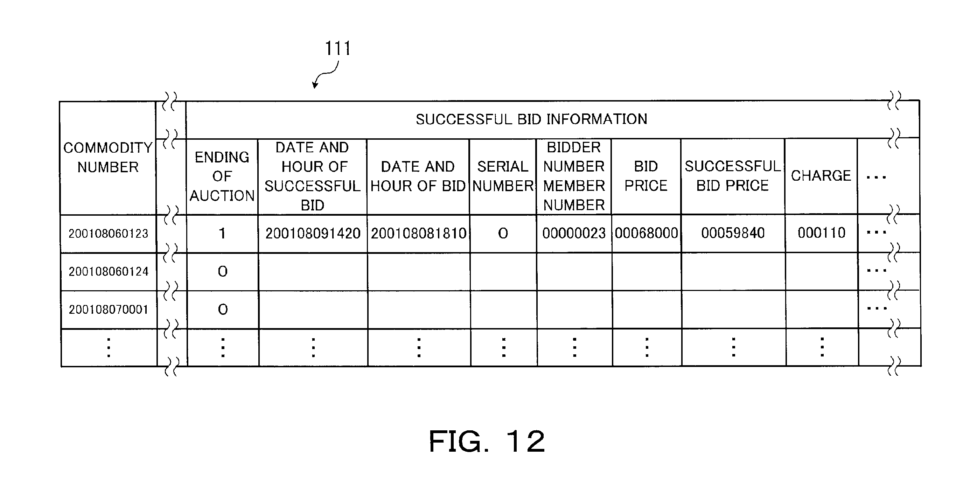

Fig. 12 is a view showing the data structure of successful bid information included in the commodity master table. The Successful Bid Information section in the commodity master table 111 includes Ending of Auction, Date and Hour of Successful Bid, Date and Hour of Bid, Serial Number, Bidder Number (Member Number), Bid Price, Successful Bid Price, and Charge columns which are associated with commodity numbers indicated in the Commodity Number column. A piece of successful bid information consists of a set of pieces of information arranged in one row.

A flag (auction flag) indicative of whether or not an auction period has ended is indicated in the Ending of Auction column. If the auction period ends, then the auction flag is set to "1." If the auction period has not ended, then the auction flag is set to "0." An auction period will end when the date and hour of the end of the auction included in basic bid information has come or when a person who put a commodity up gives instructions to end the auction.

The date and hour of a successful bid is indicated in the Date and Hour of Successful Bid column. The date and hour of a bid made by a successful bidder is indicated in the Date and Hour of Bid column. If a plurality of bids are made at the same date and hour, a serial number given to identify each of the bids is indicated in the Serial Number column. The member number of a bidder is indicated in the Bidder Number (Member Number) column. A bid price is indicated in the Bid Price column in yen. A successful bid price is indicated in the Successful Bid Price column in yen. If the function of gradually dropping a successful bid price is used, the successful bid price is below the bid price. A charge to be paid by a person who put a commodity up to the operator of a net auction management unit is indicated in the Charge column in yen.

For example, successful bid information corresponding to the commodity number "200108060123" is as follows. An auction flag is "1." This means that an auction period has ended. The date and hour of a successful bid is 14:20 on August 9, 2001 (200108091420). The date and hour of a bid is 18:10 on August 8, 2001 (200108081810). A serial number is "0." The member number of a bidder is "00000023." A bid price is 68,000 yen (00068000). A successful bid price is 59,840 yen (00059840). A charge is 110 yen (000110).

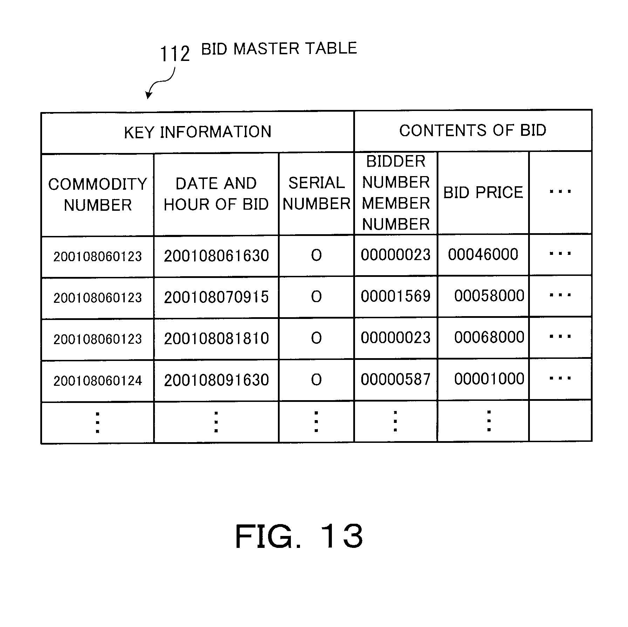

Fig. 13 is a view showing the data structure of a bid master table. The bid master table 112 includes Key Information section and Contents of Bid section. A piece of bid information consists of a set of pieces of information arranged in one row. The Key Information section includes information (key information) which serves as an identification key to bid information. The Contents of Bid section includes the contents of the bid information.

The Key Information section is subdivided into Commodity Number, Date and Hour of Bid, and Serial Number columns. The commodity number of a commodity for which a bid is made is indicated in the Commodity Number column. The date and hour of a bid is indicated in the Date and Hour of Bid column. If a plurality of bids are made for the same commodity (commodity numbers are the same) at the same time, a serial number given to each of the bids is indicated in the Serial Number column.

The Contents of Bid section is subdivided into Bidder Number (Member Number) column, Bid Price column, etc. The member number of a bidder is indicated in the Bidder Number (Member Number) column. A bid price is indicated in the Bid Price column in yen.

For example, a bid was made for a commodity given the commodity number "200108060123" at 16:30 on August 6, 2001. A serial number given to the bid is "0." The member number of a person who made the bid is "00000023." A bid price is 46,000 yen (00046000).

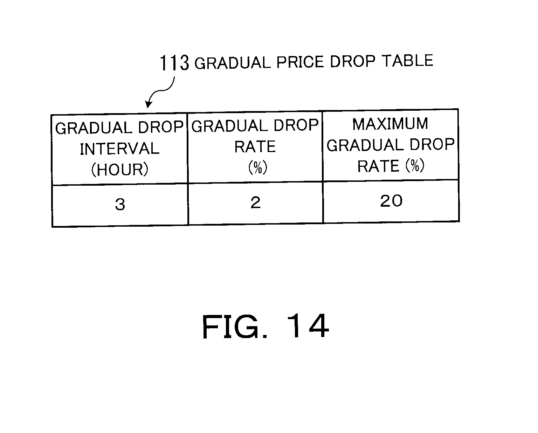

Fig. 14 is a view showing the data structure of a gradual price drop table. The gradual price drop table 113 includes Gradual Drop Interval (Hour), Gradual Drop Rate (%), and Maximum Gradual Drop Rate (%) columns.

A time interval at which the process of gradually dropping a successful bid price is performed repeatedly on one bid is indicated in advance in the Gradual Drop Interval (Hour) column in hours. A rate by which a successful bid price is dropped by performing the process of gradually dropping once is indicated in advance in the Gradual Drop Rate (%) column. The maximum gradual drop rate for a bid price is indicated in advance in the Maximum Gradual Drop Rate (%) column.

In this embodiment, a gradual drop interval, gradual drop rate, and maximum gradual drop rate indicated in the gradual price drop table 113 will be applied to all of the commodities treated on the net auction management unit 100. In this example, a gradual drop interval, gradual drop rate, and maximum gradual drop rate are 3 hours, 2%, and 20% respectively.

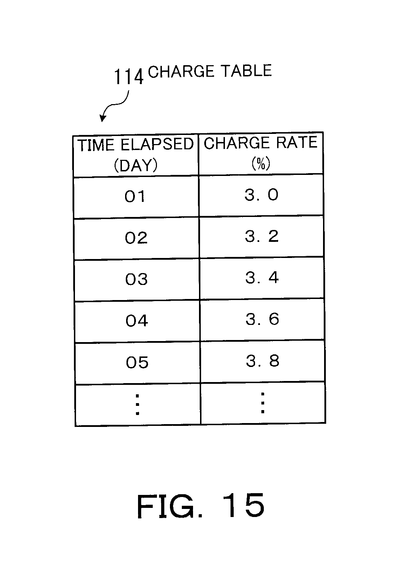

Fig. 15 is a view showing the data structure of a charge table. The charge table 114 includes Time Elapsed (Day) and Charge Rate (%) columns. Pieces of information arranged in each row are associated with each other. Time which elapsed after the beginning of an auction of a commodity is indicated in the Time Elapsed (Day) column in days. A charge rate according to the time elapsed is indicated in the Charge Rate (%) column. A charge is calculated by multiplying a successful bid price and a charge rate (one hundredth of a numeric value indicated in percent) together. Each value included in the charge table 114 will be set in advance by the organizer of an auction.

In this example, if the time elapsed is one day (within 24 hours after the beginning of an auction), then a charge rate is 3.0%. If the time elapsed is two days (between 24 and 48 hours after the beginning of an auction), then a charge rate is 3.2%. Similarly, each time the time elapsed increases by one day (24 hours), a charge rate rises by 0.2%.

If a net auction is held with the net auction management unit 100 having the above configuration and data structure, a successful bid price can gradually be dropped according to time which elapsed after a bid being made, and a charge can gradually be raised according to time which elapsed after the beginning of an auction. Now, the procedures of processes performed on the net auction management unit 100 will be described.

First, the process of putting a commodity up will be described. Descriptions will be given with a case where a person uses the terminal unit 210 to put a commodity up as an example.

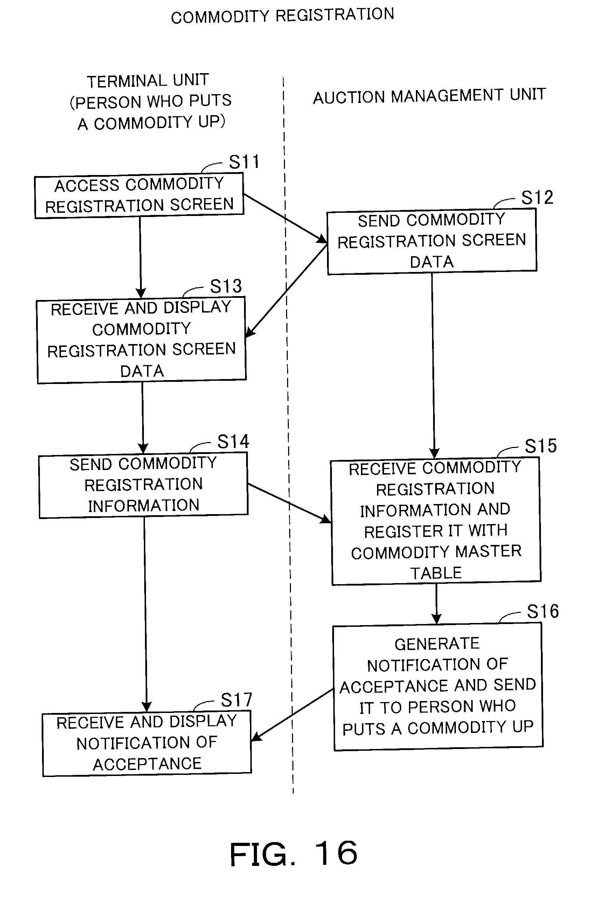

Fig. 16 is a flow chart showing the procedure for putting a commodity up. In Fig. 16, a process performed on the terminal unit 210 used by a person who puts a commodity up is shown on the left-hand side and a process performed on the net auction management unit 100 is shown on the right-hand side. Now, the processes shown in Fig. 16 will be described in order of step number.

[Step S11] The terminal unit 210 accesses the net auction management unit 100 in response to input from a person who puts a commodity up. For example, the terminal unit 210 specifies the home page address of a commodity registration screen opened to the public by the net auction management unit 100 and makes a request to read a commodity registration screen.

[Step S12] The commodity registration section 120 in the net auction management unit 100 sends commodity registration screen data which defines images displayed on the commodity registration screen to the terminal unit 210 in response to the access from the terminal unit 210. This commodity registration screen data is, for example, a hypertext markup language (HTML) file.

[Step S13] The terminal unit 210 receives the commodity registration screen data sent from the net auction management unit 100 and displays the commodity registration screen on a display unit.

The person who puts a commodity up can enter commodity registration information into the terminal unit 210 by entering arbitrary information in an input area displayed on the commodity registration screen. For example, he/she will enter commodity information, such as his/her member number, a commodity name, an image file name, and a detailed description, and conditions for bidding, such as the date and hour of the beginning of an auction, the date and hour of the end of the auction, the lowest bid price, and the use of a gradual drop.

[Step S14] When the person who puts a commodity up gives the terminal unit 210 instructions to establish commodity registration information, the terminal unit 210 sends the commodity registration information entered by him/her to the net auction management unit 100.

[Step S15] The commodity registration section 120 in the net auction management unit 100 receives the commodity registration information and registers it with the commodity master table 111. The commodity registration information includes basic commodity information and basic bid information.

[Step S16] The commodity registration section 120 in the net auction management unit 100 generates notification of acceptance and sends it to the terminal unit 210 used by the person who puts a commodity up.

[Step S17] The terminal unit 210 receives the notification of acceptance sent from the commodity registration section 120 and displays its contents on the display unit.

A person who puts a commodity up for auction can register information regarding the commodity in this way.

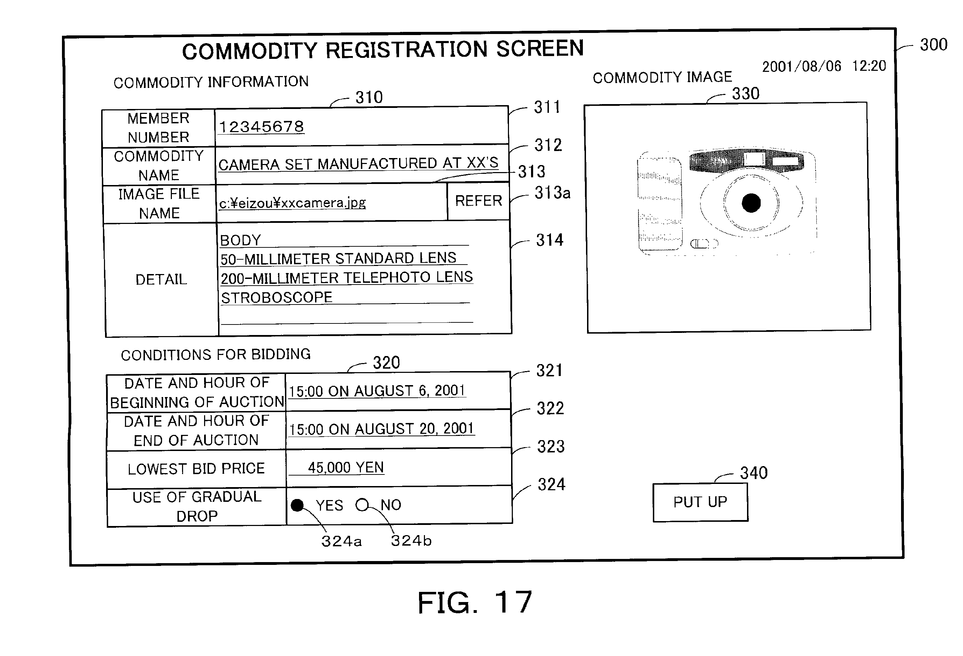

Fig. 17 is a view showing an example of a commodity registration screen. Commodity Information input area 310, Conditions for Bidding input area 320, Commodity Image display area 330, and button 340 with the words "Put Up" on it are displayed on a commodity registration screen 300 displayed on the terminal unit 210 used by a person who puts a commodity up.

The Commodity Information input area 310 is an area where basic commodity information is entered. The Commodity Information input area 310 includes Member Number input area 311, Commodity Name input area 312, Image File Name input area 313, and Detail input area 314.

The Member Number input area 311 is an area where the member number of a person who puts a commodity up is entered. The Commodity Name input area 312 is an area where the name of a commodity put up is entered. The Image File Name input area 313 is an area where the place where images of a commodity are stored and the name of a file containing these images are entered.

The Refer button 313a is displayed next door to the Image File Name input area 313. The Refer button 313a is used to select an image file from among files stored in the terminal unit 210. When the Refer button 313a is pressed, a list of files stored in the terminal unit 210 appears. When an image file for a commodity put up is selected from this list, the place where a selected file is stored and the name of this file are shown in the Image File Name input area 313.

The Detail input area 314 is an area where a detailed description of a commodity is entered.

The Conditions for Bidding input area 320 is an area where basic bid information is entered. The Conditions for Bidding input area 320 includes Date and Hour of Beginning of Auction input area 321, Date and Hour of End of Auction input area 322, Lowest Bid Price input area 323, and Use of Gradual Drop input area 324.

The Date and Hour of Beginning of Auction input area 321 is an area where the date and hour of the beginning of an auction a person who puts a commodity up desires is entered. The Date and Hour of End of Auction input area 322 is an area where the date and hour of the end of an auction a person who puts a commodity up desires is entered. The Lowest Bid Price input area 323 is an area where the lowest bid price a person who puts a commodity up desires is entered. The Use of Gradual Drop input area 324 is an area where whether or not the function of gradually dropping a successful bid price is used is specified.

In this example, a check box 324a corresponding to "Yes" and a check box 324b corresponding to "No" are displayed in the Use of Gradual Drop input area 324. When a person who puts a commodity up selects one of the two check boxes, whether or not this function is used is specified.

The Commodity Image Display area 330 is an area where an image of a commodity is displayed. In this example, an image is generated on the basis of an image file specified in the Image File Name input area 313 and is displayed in the Commodity Image display area 330.

The button 340 with the words "Put Up" on it is used to establish the contents of information entered on the commodity registration screen 300 and to send commodity registration information to the net auction management unit 100. When the button 340 is pressed, commodity registration information including information entered in each input area on the commodity registration screen 300 is generated on the terminal unit 210 and is sent to the net auction management unit 100 via the Internet 10.

By entering necessary particulars in each input area on the commodity registration screen 300 and pressing the button 340 with the words "Put Up" on it, a person can easily put a commodity up for auction.

Now, a bid process performed by a bidder will be described. It is assumed that a bidder uses the terminal unit 220.

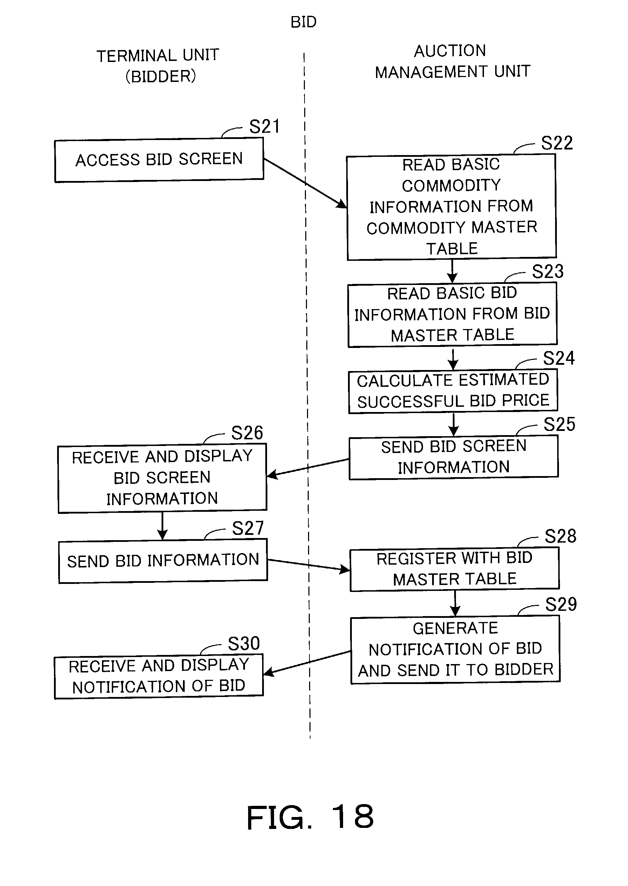

Fig. 18 is a flow chart showing the procedure of a bid process. In Fig. 18, a process performed on the terminal unit 220 used by a bidder is shown on the left-hand side and a process performed on the net auction management unit 100 is shown on the right-hand side. Now, the processes shown in Fig. 18 will be described in order of step number.

[Step S21] The terminal unit 220 accesses the net auction management unit 100 in response to input from a bidder. For example, the terminal unit 220 specifies the home page address of a bid screen opened to the public by the net auction management unit 100 and makes a request to read a bid screen for a commodity specified by the bidder. To specify a commodity for which a bid is made, the bidder, for example, clicks on the commodity which appears in a list of commodities.

[Step S22] The commodity information provision section 130 in the net auction management unit 100 reads commodity information regarding the commodity specified by the terminal unit 220 from the commodity master table 111.

[Step S23] The commodity information provision section 130 in the net auction management unit 100 reads bid information regarding the commodity specified by the terminal unit 220 from the bid master table 112.

[Step S24] The commodity information provision section 130 in the net auction management unit 100 requests the price determination section 160 to calculate an estimated successful bid price. The price determination section 160 calculates an estimated successful bid price at the request of the commodity information provision section 130. The estimated successful bid price calculated is passed from the price determination section 160 to the commodity information provision section 130.

[Step S25] The commodity information provision section 130 in the net auction management unit 100 generates bid screen data including the commodity information, bid information, and estimated successful bid price and sends it to the terminal unit 220 used by the bidder.

[Step S26] The terminal unit 220 receives the bid screen data from the commodity information provision section 130 and displays a bid screen on a display unit.

The bidder looks at the present situation, such as the last bid price, displayed on the bid screen. If he/she wants to make a bid, then he/she enters bid information, such as a member number and bid price, on the bid screen and then gives the terminal unit 220 instructions to make a bid.

[Step S27] The terminal unit 220 receives the bid information and instructions to make a bid entered by the bidder, and sends the bid information to the bid acceptance section 140 in the net auction management unit 100.

[Step S28] The bid acceptance section 140 in the net auction management unit 100 receives the bid information from the terminal unit 220 used by the bidder and registers it with the bid master table 112.

[Step S29] The bid acceptance section 140 in the net auction management unit 100 generates notification of bid which indicates that the bid acceptance section 140 accepted the bid, and sends it to the terminal unit 220 used by the bidder.

[Step S30] The terminal unit 220 receives the notification of bid from the bid acceptance section 140 and displays it on the display unit.

A bidder can check, for example, the present situation of a commodity put up for auction and make a bid for the commodity in this way.

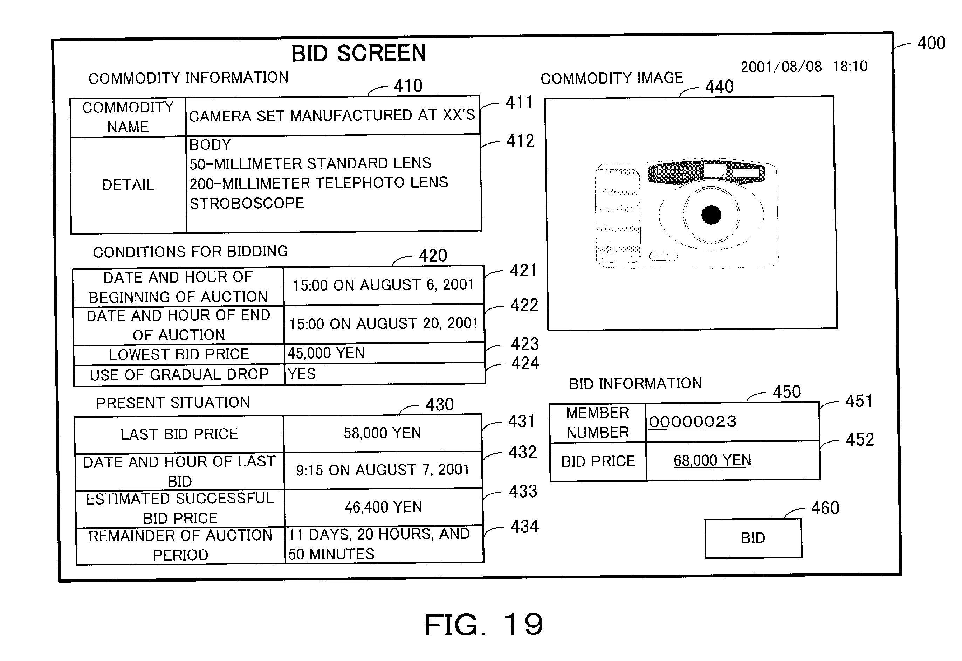

Fig. 19 is a view showing an example of a bid screen. A bid screen 400 will be displayed on the terminal unit 220 used by a bidder to enter bid information. Commodity Information display area 410, Conditions for Bidding display area 420, Present Situation display area 430, Commodity Image display area 440, Bid Information input area 450, and button 460 with the word "Bid" on it are displayed on the bid screen 400.

The Commodity Information display area 410 is an area where information regarding a commodity put up is displayed. The Commodity Information display area 410 includes Commodity Name display area 411 and Detail display area 412. The name of a commodity is displayed in the Commodity Name display area 411. A detailed description of a commodity is displayed in the Detail display area 412.

The Conditions for Bidding display area 420 is an area where condition for bidding set by a person who puts a commodity up are displayed. The Conditions for Bidding display area 420 includes Date and Hour of Beginning of Auction display area 421, Date and Hour of End of Auction display area 422, Lowest Bid Price display area 423, and Use of Gradual Drop display area 424.

The date and hour of the beginning of an auction is displayed in the Date and Hour of Beginning of Auction display area 421. The date and hour of the end of an auction is displayed in the Date and Hour of End of Auction display area 422. The lowest bid price a person who puts a commodity up desires is displayed in the Lowest Bid Price display area 423. Whether or not the function of gradually dropping a successful bid price is used is displayed in the Use of Gradual Drop display area 424. If this function is used, then "Yes" is displayed in the Use of Gradual Drop display area 424. If this function is not used, then "No" is displayed in the Use of Gradual Drop display area 424.

The Present Situation display area 430 is an area where the present situation of an auction is displayed. The Present Situation display area 430 includes Last Bid Price display area 431, Date and Hour of Last Bid display area 432, Estimated Successful Bid Price display area 433, and Remainder of Auction Period display area 434.

A bid price specified in the last bid is displayed in the Last Bid Price display area 431. The date and hour of the last bid is displayed in the Date and Hour of Last Bid display area 432. A successful bid price determined if a commodity is knocked down at the present point as a result of the last bid is displayed in the Estimated Successful Bid Price display area 433. A change in estimated successful bid price may be displayed with a graph (such as a line graph) like the one shown in Fig. 2. The remainder of an auction period is displayed in the Remainder of Auction Period display area 434.

An image of a commodity put up is displayed in the Commodity Image display area 440.

The Bid Information input area 450 is an area where bid information is entered in the case of a bidder making a bid. The Bid Information input area 450 includes Member Number input area 451 and Bid Price input area 452. The Member Number input area 451 is an area where a member number given in advance to a bidder is entered. The Bid Price input area 452 is an area where a bid price for a commodity is entered.

The button 460 with the word "Bid" on it is used to send bid information to the net auction management unit 100. When the button 460 is pressed, information entered in the Bid Information input area 450 is sent to the net auction management unit 100.

By referring to information displayed on each display area of the bid screen 400, a bidder checks the value of a commodity put up and the present price (last bid price). If he/she wants the commodity and thinks that he/she may just as well buy it at a price higher than the present price, then he/she will enter his/her member number and a bid price in the Bid Information input area 450. This bid price must be higher than the last bid price. Then he/she presses the button 460 with the word "Bid" on it. As a result, the bid information entered in the Bid Information input area 450 will be sent to the net auction management unit 100. A bidder can easily make a bid in this way.

If the function of gradually dropping a successful bid price is used, the gradual drop rate of a successful bid price becomes higher, the longer the period from a bid to a successful bid becomes. That is to say, the earlier a bid is made, the higher the gradual drop rate of a successful bid price becomes. Moreover, there is a case where an auction period ends early by the intention of a person who put a commodity up. Therefore, if a bid is not made early, the commodity may be knocked down to another bidder. If these conditions are taken into consideration, a bidder who thinks that he/she may just as well buy a commodity at a price higher than the present price has no reason for delaying his/her bid. As a result, in many cases, bidders who want to buy a commodity will make bids immediately.

Now, the process of ending an auction performed at any time by a person who put a commodity up will be described.

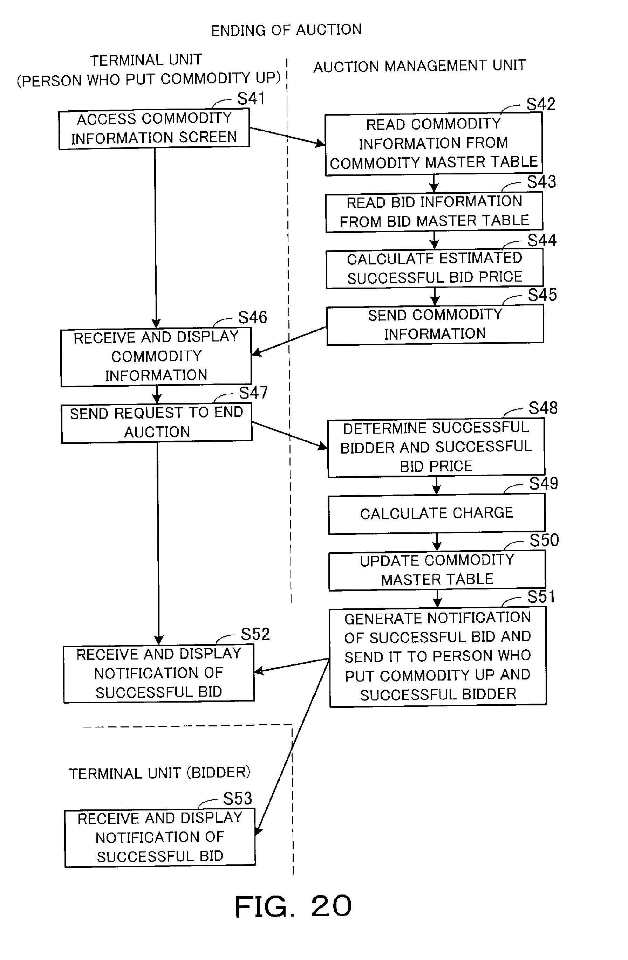

Fig. 20 is a flow chart showing the procedure of an auction ending process. In Fig. 20, a process performed on the terminal unit 210 used by a person who put a commodity up is shown in the upper left portion, a process performed on the terminal unit 220 used by a bidder is shown in the lower left portion, and a process performed on the net auction management unit 100 is shown on the right-hand side. Now, the processes shown in Fig. 20 will be described in order of step number.

[Step S41] First, a person who put a commodity up operates the terminal unit 210 to access a commodity information screen on the net auction management unit 100. For example, the terminal unit 210 specifies the home page address of a commodity information screen opened to the public by the net auction management unit 100 and makes a request to read a commodity information screen for a commodity specified by him/her. In this case, usually the operation of clicking on an appropriate commodity in a list of commodities is used.

[Step S42] The commodity information provision section 130 in the net auction management unit 100 reads commodity information regarding the appropriate commodity from the commodity master table 111 in response to the access from the terminal unit 210.

[Step S43] The commodity information provision section 130 in the net auction management unit 100 reads bid information from the bid master table 112.

[Step S44] The commodity information provision section 130 in the net auction management unit 100 requests the price determination section 160 to calculate an estimated successful bid price. The price determination section 160 calculates an estimated successful bid price for which the commodity will be knocked down to the highest bidder (successful bidder-to-be) at the request of the commodity information provision section 130. The estimated successful bid price calculated is passed from the price determination section 160 to the commodity information provision section 130.

[Step S45] The commodity information provision section 130 in the net auction management unit 100 generates commodity information screen data including the commodity information, bid information, and estimated successful bid price and sends it to the terminal unit 210 used by the person who put the commodity up. This commodity information screen data is, for example, an HTML file.

[Step S46] The terminal unit 210 receives the commodity information screen data from the commodity information provision section 130 and displays a commodity information screen on a display unit.

The person who put the commodity up checks the bidding situation including the estimated successful bid price displayed on the commodity information screen. If he/she wants to continue the auction, then he/she will display another screen without doing anything on the commodity information screen. If he/she wants to end the auction, then he/she will enter instructions to end the auction into the terminal unit 210.

[Step S47] When the person who put the commodity up enters instructions to end the auction into the terminal unit 210, the terminal unit 210 receives the instructions and sends the net auction management unit 100 a request to end the auction.

[Step S48] The auction ending section 150 in the net auction management unit 100 receives the request to end the auction from the terminal unit 210 and determines the highest bidder at that point of time as a successful bidder. Moreover, a successful bid price is determined on the basis of a price bid by the successful bidder. To be concrete, the successful bidder-to-be and estimated successful bid price determined by the price determination section 160 in step S44 are determined as a successful bidder and successful bid price respectively.

[Step S49] The auction ending section 150 in the net auction management unit 100 requests the charge determination section 170 to calculate a charge. When the charge determination section 170 receives the request to calculate a charge, the charge determination section 170 refers to the charge table 114 and commodity master table 111 to calculate a charge. To be concrete, the charge determination section 170 calculates the time elapsed from the date and hour of the beginning of the auction included in the commodity master table 111 and calculates a charge corresponding to the time elapsed in compliance with the rule defined in the charge table 114. The charge determination section 170 informs the auction ending section 150 of the charge calculated.

[Step S50] The auction ending section 150 in the net auction management unit 100 refers to the bid master table 112, obtains bid information regarding the successful bidder, and updates the commodity master table 111 with the bid information and successful bid information including the successful bid price and charge.

[Step S51] The auction ending section 150 in the net auction management unit 100 generates notification of successful bid for the person who put the commodity up and notification of successful bid for the successful bidder. The auction ending section 150 sends the notification of successful bid for the person who put the commodity up to the terminal unit 210 used by the person who put the commodity up and sends the notification of successful bid for the successful bidder to the terminal unit 220 used by the successful bidder.

[Step S52] The terminal unit 210 used by the person who put the commodity up receives the notification of successful bid sent from the auction ending section 150 and displays it on the display unit.

[Step S53] The terminal unit 220 used by the successful bidder receives the notification of successful bid sent from the auction ending section 150 and displays it on a display unit.

A person who put a commodity up for auction can refer to information regarding bids made for the commodity and end the auction at any time in this way.

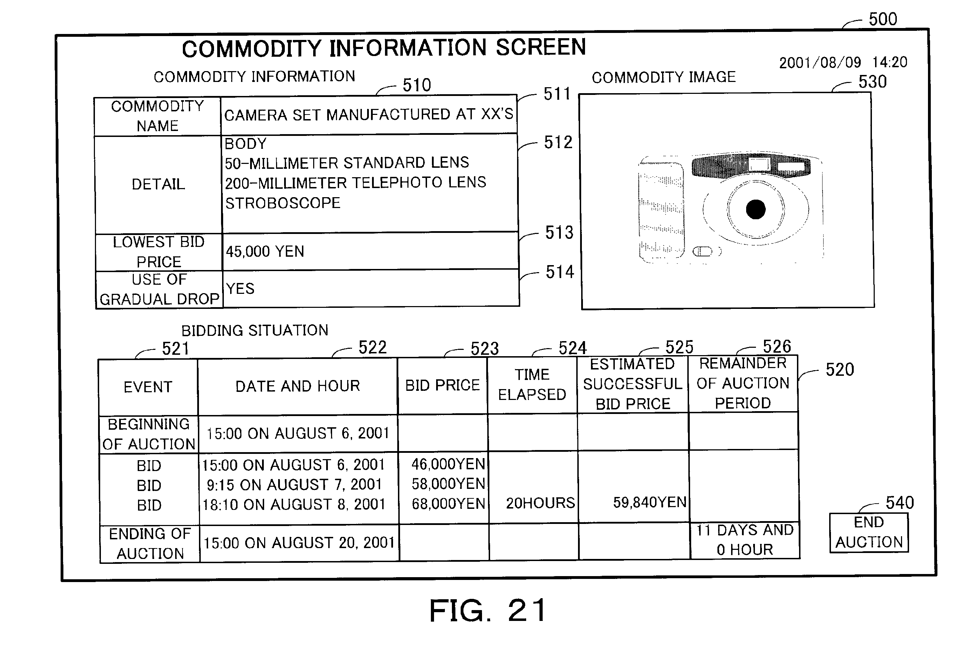

Fig. 21 is a view showing an example of a commodity information screen. A commodity information screen 500 will be displayed on the display unit of the terminal unit 210 used by a person who put a commodity up. Commodity Information display area 510, Bidding Situation display area 520, Commodity Image display area 530, and button 540 with the words "End Auction" on it are displayed on the commodity information screen 500.

The Commodity Information display area 510 is an area where information regarding a commodity put up is displayed. The Commodity Information display area 510 includes Commodity Name display area 511, Detail display area 512, Lowest Bid Price display area 513, and Use of Gradual Drop display area 514. The name of a commodity is displayed in the Commodity Name display area 511. A detailed description of a commodity is displayed in the Detail display area 512. The lowest bid price a person who puts a commodity up desires is displayed in the Lowest Bid Price display area 513. Whether or not the function of gradually dropping a successful bid price is used is displayed in the Use of Gradual Drop display area 514. If this function is used, then "Yes" is displayed in the Use of Gradual Drop display area 514. If this function is not used, then "No" is displayed in the Use of Gradual Drop display area 514.

The Bidding Situation display area 520 is an area where information regarding each of events related to bidding is displayed. The Bidding Situation display area 520 includes Event display column 521, Date and Hour display column 522, Bid Price display column 523, Time Elapsed display column 524, Estimated Successful Bid Price display column 525, and Remainder of Auction Period display column 526. Pieces of information arranged in the same row in these columns are associated with one another.

Events related to bidding are displayed in the Event display column 521. Events are the beginning of an auction, bids, and the ending of an auction. The date and hour of the occurrence of each event is displayed in the Date and Hour display column 522. In this example, the auction has not ended yet, so the displayed date and hour of the occurrence of the event of the ending of an auction is an expected date and hour.

A bid price offered in the event of a bid is displayed in the Bid Price display column 523. Time which elapsed after the occurrence of the event of the last bid and before now is displayed in the Time Elapsed display column 524. An estimated successful bid price determined on the basis of the last bid in the case of ending an auction at the present time is displayed in the Estimated Successful Bid Price display column 525. How much time there is until the expected date and hour of the occurrence of the event of the ending of an auction is displayed in the Remainder of Auction Period display column 526.

An image of a commodity put up is displayed in the Commodity Image display area 530.

The button 540 with the words "End Auction" on it is used to end an auction at once without waiting until the date and hour of the end of the auction. When the button 540 is pressed, a request to end an auction is sent from the terminal unit 210 to the net auction management unit 100.

By referring to the commodity information screen 500, a person who put a commodity up can check the present bidding situation regarding the commodity. At this time he/she will judge whether to sell the commodity at an estimated successful bid price by ending an auction period.

If he/she ends the auction at once, he/she can sell the commodity at the estimated successful bid price. On the other hand, if he/she chooses to watch for a while how things stand, he/she can expect a higher bid. However, if another bid is not made, then the estimated successful bid price will drop further. Moreover, the longer time which elapsed after the beginning of the auction becomes, the heavier a charge becomes. Therefore, if intervals at which bids are made are long and the possibility of the next bid being made is small, then it will be more advantageous to him/her to end the auction period at once. By taking these things into consideration, he/she will judge whether to end the auction period.

If he/she chooses to end the auction period, he/she will press the button 540 with the words "End Auction" on it. As a result, he/she can end the auction and sell the commodity at the estimated successful bid price displayed on the commodity information screen 500.

Now, the process of determining a successful bid price in the case of the function of gradually dropping the successful bid price being used will be described in detail.

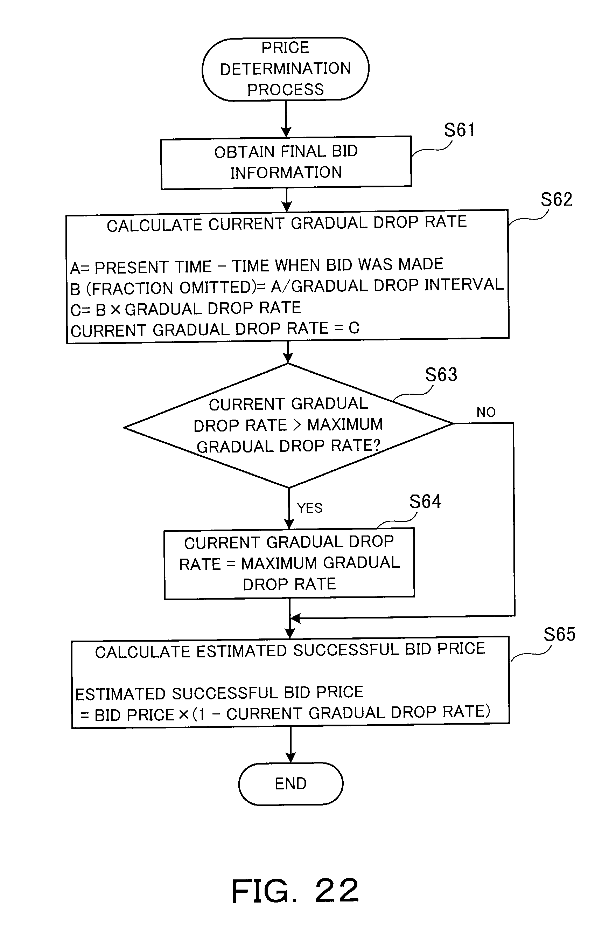

Fig. 22 is a flow chart showing the procedure of a price determination process. A price determination process is performed by the price determination section 160 which received a request to calculate an estimated successful bid price. A request to calculate an estimated successful bid price is sent from the commodity information provision section 130 when a bidder or a person who put a commodity up requests with a terminal unit to display a specific commodity. Now, the process shown in Fig. 22 will be described in order of step number.

[Step S61] The price determination section 160 refers to the bid master table 112 and obtains final bid information regarding a commodity specified.

[Step S62] The price determination section 160 calculates the current gradual drop rate on the basis of the bid information obtained. To be concrete, the price determination section 160 calculates time A which have elapsed since a bid being made (A= the present time - the time when a bid was made). Then the price determination section 160 divides the time A by the gradual drop interval indicated in the gradual price drop table 113. In that case, the price determination section 160 omits the fraction (figures below a decimal point) of a result obtained (B (fraction omitted) = A/gradual drop interval). And then the price determination section 160 multiplies the result B and gradual drop rate together to find the current gradual drop rate C (C= B×gradual drop rate).

[Step S63] The price determination section 160 compares the current gradual drop rate and maximum gradual drop rate to judge whether the current gradual drop rate is higher than the maximum gradual drop rate. If the current gradual drop rate is higher than the maximum gradual drop rate, then step S64 will be performed. If the current gradual drop rate is lower than or equal to the maximum gradual drop rate, then step S65 will be performed.

[Step S64] The price determination section 160 sets the maximum gradual drop rate as the current gradual drop rate. This prevents the current gradual drop rate calculated in step S62 from exceeding the maximum gradual drop rate indicated in the gradual price drop table 113.

[Step S65] The price determination section 160 passes a value obtained by subtracting an amount corresponding to the current gradual drop rate, which is obtained by multiplying a bid price included in the final bid information and the current gradual drop rate together, from the bid price to the commodity information provision section 130 as an estimated successful bid price (estimated successful bid price = bid price × (1 - current gradual drop rate)). In this case, the value of the current gradual drop rate shown in a percentage is converted into a decimal. For example, 20 percent is converted into 0.2.

By gradually dropping a bid price in this way at a gradual drop rate corresponding to time which has elapsed after a bid, an estimated successful bid price can be calculated. When an auction period ends, an estimated successful bid price becomes a successful bid price.

Now, the details of a charge determination process will be described.

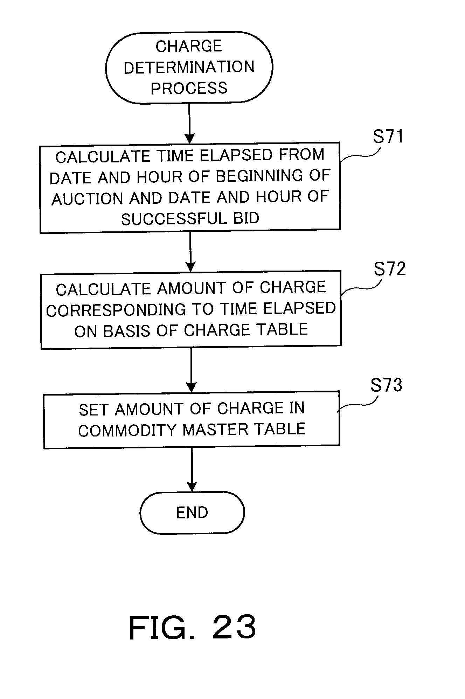

Fig. 23 is a flow chart showing the procedure of a charge determination process. Now, the process shown in Fig. 23 will be described in order of step number.

[Step S71] The charge determination section 170 calculates time which elapsed after the beginning of an auction and before a successful bid being made.

[Step S72] The charge determination section 170 finds a charge corresponding to the time elapsed on the basis of the charge table 114. In this embodiment, the amount of a charge collected will depend on a charge rate on a successful bid price. That is to say, a charge rate is extracted from the charge table 114 and this charge rate and a successful bid price are multiplied together to calculate the amount of a charge. In this case, the value of the charge rate shown in a percentage is converted into a decimal. For example, 3 percent is converted into 0.03.

[Step S73] The charge determination section 170 passes the amount of the charge calculated to the auction ending section 150. Then the auction ending section 150 includes the amount of the charge in successful bid information and sets it in the Successful Bid Information section in the commodity master table 111.

A charge corresponding to time which elapsed after the beginning of an auction can be calculated in this way.

As described above, in this embodiment, a new auction according to the expectations of a person who puts a commodity up, bidders, and an organizer can be realized. That is to say, a person who puts a commodity up can end an auction at will. "Another bid may be made. But, if I wait for it in vain, a drop in the estimated successful bid price will result in a loss to me," he/she thinks and frets. This fretfulness and the law of competition based on a horse trade with a bidder can raise his/her consciousness of being a participant in an auction. Moreover, bids are not made intensively just before the end of an expected auction period, so a commodity will be knocked down through strong price competition.

An estimated successful bid price gradually drops after a bid, so it is advantageous to a bidder to make a bid early. In addition, it is impossible for a bidder to know in advance when a person who put a commodity up ends an auction. Therefore, if a bidder makes a bid early, there is a high probability that the commodity will be knocked down to him/her.

Bids will be made early in this way and probably will not be made intensively just before the end of an expected auction period, so the load on an auction system will be reduced. This is advantageous to an organizer. Moreover, a person who put a commodity up can end an auction at will, so the commodity will be sold in a short period of time. As a result, more commodities can be sold without expanding an existing system.

By the way, in the above embodiment, one piece of gradual price drop information is defined for the net auction management unit 100. However, gradual price drop information according to commodities put up can be set. In this case, information according to commodities will be registered with a gradual price drop table.

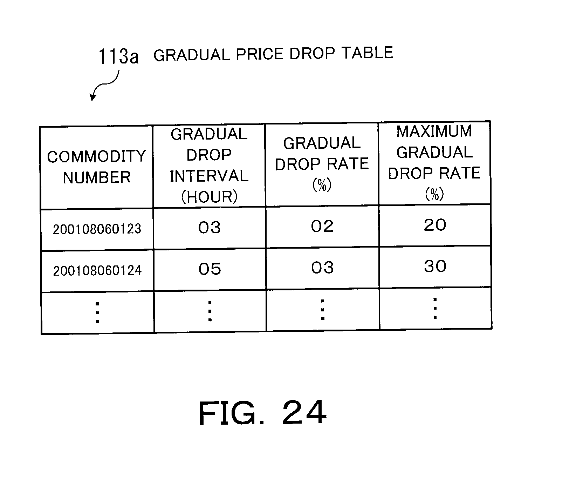

Fig. 24 is a view showing the data structure of a gradual price drop table in which gradual price drop information according to commodities can be set. A gradual price drop table 113a includes Commodity Number, Gradual Drop Interval (Hour), Gradual Drop Rate (%), and Maximum Gradual Drop Rate (%) columns. Gradual price drop information for each commodity consists of a set of pieces of information arranged in one row.

The number of a commodity put up is indicated in the Commodity Number column. A time interval at which the process of gradually dropping a successful bid price is performed repeatedly on one bid is indicated in the Gradual Drop Interval (Hour) column in hours. A rate by which a successful bid price is dropped by performing the process of gradually dropping once is indicated in the Gradual Drop Rate (%) column. The maximum gradual drop rate for a bid price is indicated in the Maximum Gradual Drop Rate (%) column.

Persons who put commodities up can arbitrarily set this gradual price drop information according to the commodities. For example, they can enter gradual price drop information for each commodity on a commodity registration screen.

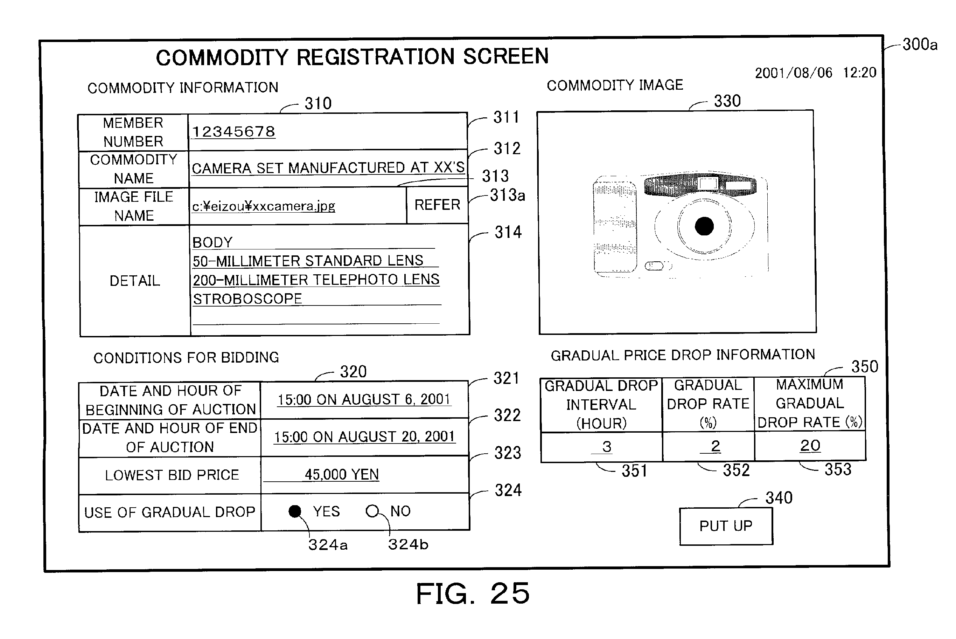

Fig. 25 is a view showing an example of a commodity registration screen on which gradual price drop information can be entered. A commodity registration screen 300a shown in Fig. 25 differs from the commodity registration screen 300 shown in Fig. 17 in that Gradual Price Drop Information input area 350 is added. The other elements on the commodity registration screen 300a are the same as those on the commodity registration screen 300. Therefore, elements on the commodity registration screen 300a which are the same as those on the commodity registration screen 300 are given the same symbols and descriptions of them will be omitted.

The Gradual Price Drop Information input area 350 is an area where gradual price drop information according to commodities is entered. The Gradual Price Drop Information input area 350 includes Gradual Drop Interval (Hour) input area 351, Gradual Drop Rate (%) input area 352, and Maximum Gradual Drop Rate (%) input area 353. The Gradual Drop Interval (Hour) input area 351 is an area where a time interval at which the process of gradually dropping a successful bid price is performed repeatedly on each bid is entered. The Gradual Drop Rate (%) input area 352 is an area where a rate by which a successful bid price is dropped by performing the process of gradually dropping once is entered. The Maximum Gradual Drop Rate (%) input area 353 is an area where the maximum gradual drop rate for a bid price is entered.

The commodity registration screen 300a is displayed on the terminal unit 210 used by a person who put a commodity up and the terminal unit 210 accepts gradual price drop information entered by him/her. The gradual price drop information entered is included in commodity information and is sent to the net auction management unit 100. As a result, the net auction management unit 100 can manage gradual price drop information according to commodities.

Gradual price drop information can be set according to commodities, so the process of gradually dropping a price can be performed in compliance with the sales policy of a person who puts a commodity up. For example, if a person who puts a commodity up desires that the commodity would sell in a short period of time, he/she can induce a bidder to make a bid early by raising a gradual drop rate.

In the above embodiment, a charge rate (a successful bid price and a charge rate are multiplied together to calculate a charge) according to time which elapsed after the beginning of an auction is set as a rule for gradually raising a charge. However, a constant amount of money may be collected as a charge regardless of successful bid prices.

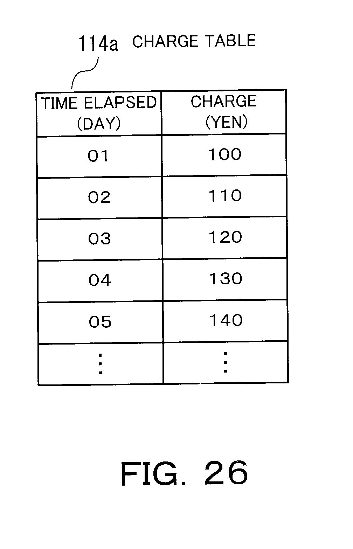

Fig. 26 is a view showing the data structure of a charge table in which charges are indicated by an amount of money. A charge table 114a shown in Fig. 26 includes Time Elapsed (Day) and Charge (Yen) columns. Pieces of information arranged in one row are associated with each other. Time which elapsed after the beginning of an auction is indicated in the Time Elapsed (Day) column in days. The amount of a charge according to the time elapsed is indicated in the Charge (Yen) column in yen. In this example, a charge is as follows. If the time elapsed is within one day, a charge is 100 yen. If the time elapsed exceeds one day, a charge increases by 10 yen per day.

The above processes can be performed with a server computer in a client server system. In that case, a server program in which the contents of the functions a net auction management unit should have are described is provided. A server computer executes this server program in response to a request from a terminal unit, being a client computer. As a result, the above processes are realized on a server computer and the results of these processes are supplied to a client computer.

This server program can be recorded on a server computer readable record medium. A server computer readable record medium can be a magnetic recording device, an optical disk, a magneto-optical recording medium, a semiconductor memory, or the like. A magnetic recording device can be a hard disk drive (HDD), a flexible disk (FD), a magnetic tape, or the like. An optical disk can be a digital versatile disc (DVD), a digital versatile disc random access memory (DVD-RAM), a compact disc read only memory (CD-ROM), a compact disc recordable (CD-R)/rewritable (CD-RW), or the like. A magneto-optical recording medium can be a magneto-optical disc (MO) or the like.

To place this server program on the market, portable record media, such as DVDs or CD-ROMs, on which it is recorded are sold.

When a server computer executes this server program, it will store the server program, which is recorded on a portable record medium, on, for example, its hard disk. Then it reads the server program from its hard disk and performs processes in compliance with the server program. The server computer can also read the server program directly from a portable record medium and perform processes in compliance with the server program.

As has been described in the foregoing, in the present invention, a successful bid price is determined by gradually dropping a bid price according to time which elapsed after acceptance of a bid established as a successful bid and before the ending of an auction period. This promotes early bidding. As a result, transactions by net auction are activated.

Moreover, an auction period ends at the request of a person who put a commodity up, and the amount calculated by gradually increasing according to the length of the auction period is collected as a charge from the person who put a commodity up. This induces a person who put a commodity up to end an auction period early at his/her will. As a result, transactions by net auction are activated.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

## Claims

1. A net auction management method for managing an auction via a network with a net auction management unit, the method comprising the steps of:
accepting bid requests via the network which specify bid prices for a commodity registered in advance;
determining one of the bid requests which specified the highest bid price before the end of an auction period as a bid established as a successful bid after the end of the auction period; and
determining a successful bid price by gradually dropping the bid price specified by the bid established as a successful bid according to time which elapsed after acceptance of the bid established as a successful bid and before the ending of the auction period.

2. The net auction management method according to claim 1, wherein the amount of a gradual drop in the bid price specified by the bid established as a successful bid is determined within the amount of a maximum gradual drop set in advance when the successful bid price is determined.

3. The net auction management method according to claim 1, wherein the judgment that the auction period has ended is made when information indicative of the ending of the auction period sent from a person who put the commodity up is received via the network.

4. The net auction management method according to claim 1, further comprising the step of calculating an estimated successful bid price in the case of the auction period ending at the present point and sending information regarding the commodity including the estimated successful bid price, in response to a request made before the end of the auction period.

5. The net auction management method according to claim 1, further comprising the step of determining the amount according to the length of the auction period as a charge imposed on the person who put the commodity up.

6. The net auction management method according to claim 5, wherein the charge is gradually raised with the lengthening of the auction period when the charge is determined.

7. A net auction management method for managing an auction via a network with a net auction management unit, the method comprising the steps of:
making the judgment, at the time of information indicative of the ending of an auction period sent from a person who put a commodity up being received via the network, that the auction period has ended; and
determining the amount obtained by gradually increasing according to the length of the auction period as a charge imposed on the person who put the commodity up after the ending of the auction period.

8. A net auction management program for managing an auction via a network, the program causing a computer to perform the steps of:
accepting bid requests via the network which specify bid prices for a commodity registered in advance;
determining one of the bid requests which specified the highest bid price before the end of an auction period as a bid established as a successful bid after the end of the auction period; and
determining a successful bid price by gradually dropping the bid price specified by the bid established as a successful bid according to time which elapsed after acceptance of the bid established as a successful bid and before the ending of the auction period.

9. A net auction management program for managing an auction via a network with a net auction management unit, the program causing a computer to perform the steps of:
making the judgment, at the time of information indicative of the ending of an auction period sent from a person who put a commodity up being received via the network, that the auction period has ended; and
determining the amount obtained by gradually increasing according to the length of the auction period as a charge imposed on the person who put the commodity up after the ending of the auction period.

10. A net auction management unit for managing an auction via a network, the unit comprising:
a bid acceptance section for accepting bid requests via the network which specify bid prices for a commodity registered in advance;
a successful bid determination section for determining one of the bid requests accepted by the bid acceptance section which specified the highest bid price before the end of an auction period as a bid established as a successful bid after the end of the auction period; and
a successful bid price determination section for determining a successful bid price by gradually dropping the bid price specified by the bid established as a successful bid according to time which elapsed after acceptance of the bid established as a successful bid determined by the successful bid determination section and before the ending of the auction period.

11. A net auction management unit for managing an auction via a network, the unit comprising:
a bid ending judgment section for making the judgment, at the time of information indicative of the ending of an auction period sent from a person who put a commodity up being received via the network, that the auction period has ended; and
a charge determination section for determining the amount obtained by gradually increasing according to the length of the auction period as a charge imposed on the person who put the commodity up after the bid ending judgment section judging that the auction period has ended.

12. A computer-readable record medium that stores a net auction management program for managing an auction via a network, the program causing a computer to perform the steps of:
accepting bid requests via the network which specify bid prices for a commodity registered in advance;
determining one of the bid requests which specified the highest bid price before the end of an auction period as a bid established as a successful bid after the end of the auction period; and
determining a successful bid price by gradually dropping the bid price specified by the bid established as a successful bid according to time which elapsed after acceptance of the bid established as a successful bid and before the ending of the auction period.

13. A computer-readable record medium that stores a net auction management program for managing an auction via a network with a net auction management unit, the program causing a computer to perform the steps of:
making the judgment, at the time of information indicative of the ending of an auction period sent from a person who put a commodity up being received via the network, that the auction period has ended; and
determining the amount obtained by gradually increasing according to the length of the auction period as a charge imposed on the person who put the commodity up after the ending of the auction period.
